# EUROPEAN PATENT SPECIFICATION

(11) **EP 4 489 909 B1**
(45) Date of publication and mention of the grant of the patent: **15.04.2026**
(21) Application number: 23709222.6
(22) Date of filing: 08.03.2023
(51) Int. Cl.: B01L 3/00, G01N 1/28

(54) **BIOLOGICAL SAMPLE TRANSFER AND REARRANGEMENT METHOD**
TRANSFER- UND UMLAGERUNGSVERFAHREN FÜR BIOLOGISCHE PROBEN
TRANSFERT D'ÉCHANTILLONS BIOLOGIQUES ET PROCÉDÉ DE RÉORGANISATION

(30) Priority: 10.03.2022 EP 22161427
(43) Date of publication of application: 15.01.2025
(73) Proprietor: Molecular Machines & Industries GmbH, 85386 Eching (DE)
(72) Inventor: NIEHREN, Stefan, 85250 Altomünster (DE)
(74) Representative: Schmitz, Joseph
(86) International application number: PCT/EP2023/055925
(87) International publication number: WO 2023/170171

(56) References cited:
- WO-A1-87/07911
- WO-A2-01/81892
- WO-A2-2017/176601
- US-A1- 2004 197 850

## Description

### TECHNICAL FIELD

The present invention relates to method for the transfer and rearrangement of multiple separate biological samples from multiple separate first locations on, for example, a microscope slide, to multiple separate second locations, such as wells, on a receiving plate.

The present invention relates furthermore to an apparatus configured to carry out said method.

### PRIOR ART

In medical diagnostics, as well as in research and development, there exists a need to be able to isolate rare cells, or small tissue samples, which occur in small numbers within larger solid tissue samples.

The rare cells or tissue samples are often surrounded within the tissue and while technology exists by which these cells can be cut from a sample, such as for example laser microdissection (LMD), the transfer of these rare cells is made in an one-by-one fashion, i.e. by picking up a given target rare cell, or a cluster of rare cells, from a substrate, and transferring it to a sample well. The rare cells are generally located on a microscope slide on which they are identified by optical, in particular fluorescence, microscopy and must be transferred to a dedicated receptacle for further analysis, for example genetic anaslysis.

For instance, it is known to transfer LMD samples using the inner surface of a microcentrifuge tube cap, or *Eppendorf*, as a transfer surface. Using a robotic tube holder, the transfer surface on the inner surface of the cap of the opened tube is contacted with the LMD sample, by gently and vertically pushing the transfer surface against the sample from above to adhere it to the inner surface of the microcentrifuge cap. The cap is then pulled away with the sample adhered to it. Once this is done, the microcentrifuge tube is closed and centrifuged. Through the centrifugal force applied, the sample is released from the inner surface of the cap and drops to the well part of the microcentrifuge tube.

This method of transferring single cells is time and labor intensive and thus requires the use of a lot of material and equipment space. In addition to the aforementioned drawbacks, the cells are stored in individual receptacles, from which they may need to be individually transferred yet again into a container that can hold multiple samples in multiple wells for further analysis, such as for example a 96-well plate. That additional transfer step further increases the risk of losing at least part of the analytical material.

WO 87/07911 A1 discloses a device and method for rearrangement and transfer of N separate biological samples from separate first locations arranged in an irregular pattern to separate second locations arranged in a regular pattern on a transfer device using a plunger made from a non-transparent material.

WO 01/81892 A2 discloses an extraction device for the transfer of separate biological samples from separate first locations arranged in an irregular pattern to separate second locations arranged in a regular pattern via laser-assisted adhesion of a thermoplastic transfer film.

US 2004/197850 A1 discloses an improved transfer film having multiple layers for laser micro-capture of a sample. The transfer film for laser micro-capture includes distinct layers for expansion and adhesion in order to optimize the performance of the transfer film, where the expansion layer is suitable for absorbing energy incident upon the transfer film and to expand to exert a force upon the adhesive layer such that a selected portion of a sample adheres to the adhesive layer for microdissection.

WO 2017/176601 A2 discloses an automated tape transfer apparatus including a tape feed mechanism feeding a continuous length of an adhesive tape through the automated tape transfer apparatus and a tape applicator applying the adhesive tape to a cutting face of a sample block.

It is therefore an aim of the present invention to provide a method, along with an apparatus, by which the above-mentioned complexity of the known transfer methods is reduced.

### SUMMARY OF THE INVENTION

The present invention provides a method, a device and an apparatus that facilitate the transfer and rearrangement of multiple, spatially separate biological samples from multiple, spatially separate locations on a tissue sample, from the "native" pattern that is inherent to the tissue sample to multiple and spatially separate locations on a transfer device into a pattern that is a regular pattern, such as a rectangular or polar array.

It is a first object of the present invention to provide a method for the rearrangement and transfer of N separate biological samples from N separate first locations arranged in an irregular pattern to M separate second locations arranged in a regular pattern on a transfer device, said transfer device comprising at least M adhesive transfer areas, wherein the at least M adhesive transfer areas are formed of at least a flexible sheet material, and wherein N ≥ 2 and N ≥ M, comprising the steps of, in this order,:
a. positioning an adhesive transfer area of the at least M adhesive transfer areas such as to bring the adhesive transfer area into overlap, in the vertical direction, with a separate biological sample of the N separate biological samples in its first location and optionally decreasing the distance, in vertical direction, between the first location of the separate biological sample and the adhesive transfer area, before or after the aforementioned positioning step,
b. extending the flexible sheet material of the adhesive transfer area of the at least M adhesive transfer areas such as to bring the flexible sheet material of said adhesive transfer area into contact with the separate biological sample of the N separate biological samples in its first location and such as to adhere the separate biological sample of the N separate biological samples to the flexible sheet material of the adhesive transfer area of the M adhesive transfer areas,
c. retracting the flexible sheet material of the adhesive transfer area of the at least M adhesive transfer areas to remove the separate biological sample of the N separate biological samples from its first location and to transfer the separate biological sample of the N separate biological samples to its second location on the transfer device, and optionally increasing the distance, in vertical direction, between the first location of the separate biological sample and the second location of the separate biological sample on the adhesive transfer area, after the aforementioned retracting step,
d. repeating steps a. to c. individually for each of the remaining separate biological samples of the N separate biological samples such as to remove each of the remaining separate biological samples of the N separate biological samples from its first location and to transfer each of the remaining separate biological samples of the N separate biological samples to its second location,
wherein the flexible sheet material is optically transparent at least within the visible spectrum (VIS),
wherein extending the flexible sheet material of the one adhesive transfer area of the M adhesive transfer areas is achieved by applying mechanical pressure using a plunger, which plunger comprises an optically transparent material.

One advantage of the method according to the first object of the present invention is that the biological samples can the removed and transferred to the transfer device directly without intermediate steps and that the single transfer device, thus loaded with multiple biological samples in a regular array, facilitates the downstream handling of the multiple biological samples.

It is understood that the method according to the first object of the present invention may be carried when the sample support plate is oriented such that the separate biological samples face down, in vertical direction, or when the sample support plate is oriented such that the separate biological samples face up, in vertical direction. The sample support plate may be flipped into the preferred orientation of the sample support plate. However, independently of the orientation of the sample support plate, the transfer device is positioned on the side of sample support plate that comprises the separate biological samples. Thus, when the sample support plate is oriented such that the separate biological samples face down, in vertical direction, the transfer device is positioned below the sample support plate, with the the at least M adhesive transfer areas facing the separate biological samples and when the sample support plate is oriented such that the separate biological samples face up, in vertical direction, the transfer device is positioned above the sample support plate, with the the at least M adhesive transfer areas facing the separate biological samples. It is noted that the adhesion of the biological samples to the adhesive transfer areas is such that it allows carrying out the method in either orientation.

In a preferred embodiment of the method according to the first object of the present invention N may be equal to M.

In a preferred embodiment of the method according to the first object of the present invention, the method further comprises the step of:
e. affixing an augmenting plate having at least M perforations to the transfer device such that the cross-sectional area of the at least M perforations overlaps, in vertical direction, with the at least M adhesive transfer areas of the transfer device, such as to form at least M wells comprising a biological sample, preferably comprising a biological samples at the bottom, wherein the side walls of each of the at least M wells are at least partially and preferably entirely defined by the inner walls of the at least M perforations of the augmenting plate and the at least M adhesive transfer areas define at least partially the bottom of the at least M wells.

An advantage of the above preferred embodiment of the method according to the first object of the present invention is that by affixing an augmenting plate, the further transfer of the biological samples to a separate multi-well plate for down-stream analysis can be avoided, since the affixing of the augmenting plate leads to the "on-sample" formation of the side walls of a well around each of the biological samples. Each newly formed well can then receive liquids, such as for example lysis buffers, that enable further analysis of the biological samples. In a more preferred embodiment, the cross-sectional area and cross-sectional shape of the at least M perforations is essentially the same as the area and shape of the at least M adhesive transfer areas of the transfer device, in vertical direction. In an another more preferred embodiment, the cross-sectional area and cross-sectional shape of the at least M perforations is smaller than the area and shape of the at least M adhesive transfer areas of the transfer device, in vertical direction, in which case the area of the adhesive transfer area that surrounds the cross-sectional area and cross-sectional shape of the at least M perforations forms a sealing gasket between transfer device and augmenting plate. It is understood that the augmenting plate having at least M perforations to the transfer device, when affixed to the transfer device, forms a seal at the contact surfaces between the at least M adhesive transfer areas of the transfer device and the augmenting plate having at least M perforations. It is further understood that the augmenting plate having at least M perforations can be affixed to the transfer device, using suitable means such as mechanical fixation means, like for example clamps, screws, interlocking pins and recesses, latches, and so forth or other means such as glueing.

In preferred embodiment of the method according to the first object of the present invention, the augmenting plate may be formed of metal or of a synthetic thermoplastic polymer such as for example polyolefin or a polymer resin such as silicon resin.

In preferred embodiment of the method according to the first object of the present invention, the augmenting plate may comprise integrated caps to close the formed wells.

In preferred embodiment of the method according to the first object of the present invention, the method further comprises, after step e., the step of:
f. closing the wells formed in step e., preferably using cap strips or cap mats, or integrated caps of the augmenting plate.

In a preferred embodiment of the method according to the first object of the present invention, the augmenting plate having at least M perforations may be equipped with a gasket, to enhance the seal between the augmenting plate and the transfer device. This may be particularly advantageous if the cross-sectional area and cross-sectional shape of the at least M perforations is greater than the area and shape of the at least M adhesive transfer areas of the transfer device, in vertical direction.

In another preferred embodiment of the method according to the first object of the present invention, the method further comprises the step of:
e. positioning the transfer device such as to bring the at least M adhesive transfer areas into overlap, in the vertical direction, with at least M wells on a receiver plate having at least M wells and such that the at least N separate biological samples face the at least M wells of the receiver plate, optionally decreasing the distance, in vertical direction, between the at least M adhesive transfer areas of the transfer device and the bottom of the at least M wells of the receiver plate, and releasing each of the separate biological samples, either simultaneously or sequentially, from the at least M adhesive transfer areas of the transfer device into the at least M wells of the receiver plate.

The method according to the first object of the present invention, when including step e., allows to potentially simplify the task of transferring multiple samples from multiple locations by performing roughly N contact and N pickup steps and one transfer step (2N+1), for the transfer of N samples, instead of N contact and N pickup steps and N transfer steps (3N) in the case of one-by-one transfer of N samples.

In preferred embodiment of the method according to the first object of the present invention, the receiver plate may comprise integrated caps for each of the wells of the received plate to close the wells.

In preferred embodiment of the method according to the first object of the present invention, the method further comprises, after step e., the step of:
f. closing the wells of the receiver plate, preferably using cap strips or cap mats, or integrated caps of the receiver plate.

In a preferred embodiment of the method according to the first object of the present invention, the method further comprises the step of, after step d., and preferably between step d. and e., treating the N separate biological samples on the at least M adhesive transfer areas of the transfer device with a releasing solution comprising a releasing agent, preferably with an aqueous releasing solution comprising a releasing agent chosen among proteolytic enzymes, such as trypsin. In particular, this may facilitate releasing each of the separate biological samples, either simultaneously or sequentially, from the at least M adhesive transfer areas of the transfer device into the at least M wells of the receiver plate in step e. For instance, the use of a releasing solution allows for shorter centrifugation time or for lesser acceleration when releasing the sample from the transfer device in a centrifuge.

In a preferred embodiment of the method according to the first object of the present invention, in step a., the distance between the first location of the separate biological sample and the adhesive transfer area can be decreased in vertical direction, and in step c. the distance between the first location of one separate biological sample and the one adhesive transfer area is increased in vertical direction. When the transfer device is approached to the biological sample, the biological sample may be taken up via the extension/retraction of the sheet material of the adhesive transfer area more easily because less extension/retraction is necessary. Likewise, after the biological sample is taken up, the transfer device may be withdrawn to facilitate the repositioning within the horizontal plane for the next iteration of taking up the next biological sample.

However, the step of approaching/withdrawing the transfer device is optional, since the transfer device may be, and remain in proximity, in the vertical direction during the iteration of the method, provided the distance between the first location of one separate biological sample and the one adhesive transfer area in vertical direction is small enough such as to allow a successful taking up of the biological sample solely by the extension/retraction of the sheet material of the adhesive transfer area. For example, this may be the case for adhesive transfer areas, preferably circular ones, when the distance between the adhesive transfer area and the first location of the biological sample is smaller than the diameter of the adhesive transfer area, or in the case of a square adhesive transfer area when the distance between the adhesive transfer area and the first location of the biological sample is smaller than a side of the adhesive transfer area.

In general, when decreasing the distance, in vertical direction, between the first location of the separate biological sample and the adhesive transfer area, or when increasing the distance, in vertical direction, between the first location of the separate biological sample and the second location of the separate biological sample on the adhesive transfer area, the threshold is less than 3, 4 or 5 mm, meaning that when decreasing the distance, the distance is decreased to less than 3, 4 or 5 mm and that when increasing the distance the distance is increased to more than 3, 4 or 5 mm. However, the threshold may also be 6, 7, 8, 9, 10 or 15 mm.

In the method according to the first object of the present invention, the flexible sheet material is optically transparent at least within the visible spectrum (VIS). When the flexible sheet material is optically transparent, various advantages are achieved depending on the configuration of the apparatus used to carry out the method. In one configuration, the apparatus includes an optical unit capable of optically identifying the biological samples across the flexible sheet from the side of the flexible sheet that faces away from the sample, i.e. from behind the flexible sheet material. In another configuration, the apparatus includes an optical subunit capable of illuminating the samples via a light source from the side of the flexible sheet that faces away from the sample i.e. from behind the flexible sheet material. In one configuration, the apparatus includes an optical unit that is capable of optically identifying the biological samples, via an optical sensor such as a camera, across the flexible sheet from the side of the flexible sheet that faces away from the sample, i.e. from behind the flexible sheet material as well as illuminating the samples, via a light source, from the side of the flexible sheet that faces away from the sample i.e. from behind the flexible sheet material.

In the method according to the first object of the present invention, the extension the sheet material of the one adhesive transfer area of the M adhesive transfer areas is achieved by applying mechanical pressure. By applying mechanical pressure, the extension of the sheet material of the one adhesive transfer area of the M adhesive transfer areas can be controlled, preferably individually, both with respect to the degree of extension and the duration of extension. It is noted that the flexible sheet material will spring back into its original shape once the applied pressure is removed.

In the method according to the first object of the present invention, the extension of the sheet material of the one adhesive transfer area of the M adhesive transfer areas is achieved by applying mechanical pressure via a plunger. A plunger has the advantage of not suffering from possible pneumatic or hydraulic leaks which may interfere with the correct operation of the method.

In a preferred embodiment of the method according to the first object of the present invention, the plunger preferably comprises, or consists of, an optically transparent material such as for example a light guide. The light guide may be configured to emit light towards the sample, across an optically transparent flexible sheet material forming the adhesive transfer areas. Thus, the plunger can advantageously fulfil both the task of extending the sheet material and that of illuminating the biological sample for better identification via an optical microscope. Alternatively, the light guide may be configured to receive light from the sample, across the sheet material in the adhesive transfer areas. In that case, the plunger can advantageously fulfil both the task of extending the sheet material and that of providing an image of the sample to an imaging device.

In a preferred embodiment of the method according to the first object of the present invention, the N separate biological samples are transferred simultaneously. The simultaneous transfer of the samples is simplified with respect to individually transferring each of the sample. The simultaneous transfer can be carried out by applying a centrifugal force or vibrations to the N separate biological samples. In order to achieve this, the transfer device can be affixed to the receiver plate such as for example a multi-well plate, and centrifuging the assembly of receiver plate and transfer device.

In a preferred embodiment of the method according to the first object of the present invention, the at least N separate biological samples in their first locations are arranged on a sample support plate, such as for example a microscope slide. The sample support plate such as a microscope slide may have a tissue section sample, such as for example a cryotome or microtome section, from which the biological sample is to be separated, applied onto it. In general, the tissue section sample will be covered with a synthetic polymer layer such as a laser sensitive layer such that the target biological sample can be cut out via laser microdissection. In most cases, thus, the spatially separate biological samples comprise a cell or cluster of cells and one or more synthetic polymer layers adhered to the cell or a cluster of cells.

In a preferred embodiment of the method according to the first object of the present invention, the entire area of the flexible sheet material or at least the adhesive transfer areas of the flexible sheet material are coated with an adhesive agent, such as for example a silicone resin. The adhesive may enhance the adhesion of the biological sample to the flexible sheet material and facilitate the taking up of the biological sample at the adhesive transfer areas.

In a preferred embodiment of the method according to the first object of the present invention, the flexible sheet material comprises, or consists of, a thermoplastic polymer material chosen among polyolefins, polesters, polycarbonates or polyamides. Alternatively, the flexible sheet material comprises, or consists of, a elastomeric polymer material such as silicone resin, for example polydimethylsiloxane (PDMS). These polymer materials were found to have good mechanical properties, such as elasticity.

In a preferred embodiment of the method according to the first object of the present invention, the flexible sheet material and in particular the thermoplastic polymer material has a thickness of from 40 to about 400 micrometers, preferably of from 40 to about 200 micrometers. It has been found that the range of thickness allows for sufficient optical transmission and mechanical property, such as elasticity. Alternatively, the flexible sheet material and in particular the elastomeric polymer material has a thickness of from up to 5 mm, preferably of up to 2 mm.

In a preferred embodiment of the method according to the first object of the present invention, the flexible sheet material is a cast film or blown film.

In a preferred embodiment of the method according to the first object of the present invention, the flexible sheet material comprises, or consists of, a cyclic olefin copolymer or cyclic olefin polymer. COC and COP have good optical properties in VIS and UV, which is advantageous when the method uses light sources and optical microscopes to identify the biological samples, and exhibit a good resistance to tear or bursting. At the same time, it has been found that these polymers further exhibit good adhesion to the biological samples as-is, i.e. without a need to apply an adhesive agent.

In a preferred embodiment of the method according to the first object of the present invention, N is at least 6, 12, 24, 48, 96 or 384.

In a preferred embodiment of the method according to the first object of the present invention, the at least M wells on a receiver plate are M wells on a multi-well plate, preferably M wells on a 96-well plate, under the proviso that M is 96 or less.

In a preferred embodiment of the method according to the first object of the present invention, the at least M wells on a receiver plate are M wells on a multi-well plate, preferably M wells on a 384-well plate, under the proviso that M is 384 or less.

In a preferred embodiment of the method according to the first object of the present invention, the at least N separate biological samples are at least N separate laser microdissection samples, in particular laser microdissection samples of cryotome sections or microtome sections such as paraffin microtome sections.

In a preferred embodiment of the method according to the first object of the present invention, the transfer device comprises a support plate having at least M perforations and supporting the sheet material, wherein the M adhesive transfer areas are defined by the overlap between the cross-sectional area of said perforations and the sheet material, wherein the perforations are preferably circular or polygonal and wherein the plate is made from a metal or a polymer.

The transfer device may be formed by a support plate having at least M perforations and where the sheet material is applied to a face of the support plate, in particular to the face directed at the biological samples. In this case the sheet material is essentially flush with the surface of the plate of the transfer device. Alternatively, the transfer device formed by a support plate having at least M perforations may comprise two plates having overlapping perforations, in vertical direction, the two plates having the flexible sheet material sandwiched between them. In this case the sheet material is essentially countersunk with respect to the surface of the plates of the transfer device, to a degree depending on the thickness of the plates.

In a preferred embodiment of the method according to the first object of the present invention, the at least M perforations have the same size and/or shape.

In a preferred embodiment of the method according to the first object of the present invention, the adhesive surface areas are arranged on the transfer device in a regular pattern that corresponds to that of the second locations, i.e. for example in an array, and more preferably are arranged in an array that at least partially corresponds to, or overlaps with, an array of wells in a 6-, 12-, 24-, 48-, 96-, 384-well plate. For example, the adhesive surface areas may be arranged on the transfer device in an array 8 x 12 or an array of 16 x 24. The regular pattern on the transfer device may correspond to an array, preferably an array of 8 x 12 or an array of 16 x 24.

In a preferred embodiment of the method according to the first object of the present invention, the at least M adhesive transfer areas are formed by a plurality of, and in particular by at least M separate sheets of the flexible sheet material. For instance, the at least M adhesive transfer areas may be formed by a plurality of tabs of the flexible sheet material, with each of the tabs overlapping with one or multiple perforations of the plate of the transfer device. The tabs may be circular with a diameter that is larger than the diameter of the perforations in the plate of the transfer device, or may be essentially rectangular strips in which the length and breadth are each larger than the diameter of the perforations in the plate of the transfer device.

In a preferred embodiment of the method according to the first object of the present invention, the at least M adhesive transfer areas are formed by one continuous sheet of the flexible sheet material. In this case, the one continuous sheet of the flexible sheet material covers and overlaps with all the perforations of the support plate of the transfer device. When using one continuous sheet of the flexible sheet material, the transfer device can be more easily assembled when compared to the use of multiple tabs of flexible sheet material.

In a preferred embodiment of the method according to the first object of the present invention, the transfer device comprises a frame and a panel, wherein the frame is preferably made from a metal or a polymer and the panel is formed by one continuous sheet of the flexible sheet material. In this case, the one sheet of the flexible sheet material spans the area in which the adhesive surface areas are comprised.

A transfer device may be used in a method for the rearrangement and transfer of N separate biological samples from N separate first locations arranged in an irregular pattern to M separate second locations arranged in a regular pattern according to the first object of the invention.

The transfer device may comprise at least M adhesive transfer areas formed of at least one sheet of a flexible sheet material, wherein said transfer device comprises a support plate having at least M perforations and wherein the at least M adhesive transfer areas are defined by the overlap between the cross-sectional area of said perforations and the sheet material, wherein the perforations are preferably circular or polygonal, and wherein the plate is made from a metal or a polymer, or wherein said transfer device comprises a frame and a panel, wherein the frame is made from a metal or a polymer and the panel is formed by one continuous sheet of the flexible sheet material. Thus, on the transfer device, each of the at least M adhesive transfer areas may take up one biological sample (N equals M), or may take up more than one sample (N larger than M).

In the transfer device, the entire area of the flexible sheet material or at least the adhesive transfer areas of the flexible sheet material may be coated with an adhesive agent, such as for example a silicone resin. The adhesive may enhance the adhesion of the biological sample to the flexible sheet material and facilitate the taking up of the biological sample at the adhesive transfer areas.

In the transfer device, the flexible sheet material may comprise, or consist of, a thermoplastic polymer material chosen among polyolefins, polesters, polycarbonates or polyamides. These polymer materials were found to have good mechanical properties, such as elasticity.

In the transfer device, the flexible sheet material may comprise, or consist of, a elastomeric polymer material chosen among silicon resins such as for example PDMS. These polymer materials were found to have good mechanical properties, such as elasticity.

In the transfer device, the flexible sheet material may have a thickness of from 40 to about 400 micrometers, preferably of from 40 to about 200 micrometers. It has been found that the range of thickness allows for sufficient optical transmission and mechanical property, such as elasticity.

It has been found that the range of thickness allows for sufficient optical transmission and mechanical property, such as elasticity. Alternatively, the flexible sheet material and in particular the elastomeric polymer material has a thickness of from up to 5 mm, preferably of up to 2 mm. It has been found that the range of thickness allows for sufficient optical transmission and mechanical property, such as elasticity.

In the transfer device, the flexible sheet material may be a cast film or blown film.

In the transfer device, the flexible sheet material may comprise, or consist of, a cyclic olefin copolymer or cyclic olefin polymer. COC and COP have good optical properties in VIS and UV, which is advantageous when the method uses light sources and optical microscopes to identify the biological samples, and exhibit a good resistance to tear or bursting. At the same time, it has been found that these polymers further exhibit good adhesion to the biological samples as-is, i.e. without a need to apply an adhesive agent.

The transfer device may comprise a support plate having M perforations, the M adhesive transfer areas are essentially in a plane with a surface of the plate and wherein said surface of the plate preferably faces the at least N separate biological samples. In the case where M adhesive transfer areas are essentially in a plane with the surface of the support plate facing the N separate biological samples, the degree of extension / retraction needed to pick up a biological sample can be reduced when compared to the case where the flexible sheet material is countersunk with respect to the outer surface of the support plate, which provides for a more robust method of transfer and/or robust operation of the transfer device. Where the M adhesive transfer areas are essentially in a plane with the surface of the support plate, manufacturing of the transfer device is simplified since, at least in some embodiments, only one support plate is needed, in contrast to when the M adhesive transfer areas are countersunk, where at least two support plates are needed.

It is second object of the present invention to provide an apparatus to carry out the method for the rearrangement and transfer according to the first object of the present invention using a transfer device, and which may be a transfer device as described above,
the apparatus comprising:
i. a first detection unit configured to optically detect the N separate biological samples in the their respective separate first locations, preferably a microscope or fluorescence microscope unit,
ii. a second positioning unit configured to carry out the steps a. to d. according to the method of the present invention for the N separate biological samples detected in step i., such as for example a linear robot or a robotic arm, said second positioning unit being equipped with a mechanical subunit having a plunger capable of extending and retracting the sheet material of the adhesive transfer areas,
   wherein extending the flexible sheet material of the one adhesive transfer area is achieved by applying mechanical pressure using the plunger, which plunger comprises an optically transparent material, said subunit preferably being connected to an optical subunit capable of illuminating the samples via a light source optically coupled to the transparent plunger of the mechanical subunit,
iii. a third unit configured to affix an augmenting plate to the transfer device, or to position the transfer device with respect to a multi-well plate.

In a preferred embodiment of the apparatus according to the second object of the present invention, the apparatus further comprises a fourth unit configured for applying a releasing solution comprising a releasing agent, preferably with an aqueous releasing solution comprising a releasing agent chosen among proteolytic enzymes, such as trypsin, to the M adhesive transfer areas of the transfer device.

Further embodiments of the invention are laid down in the dependent claims.

### BRIEF DESCRIPTION OF THE DRAWINGS

Preferred embodiments of the invention are described in the following with reference to the drawings, which are for the purpose of illustrating the present preferred embodiments of the invention and not for the purpose of limiting the same. In the drawings,

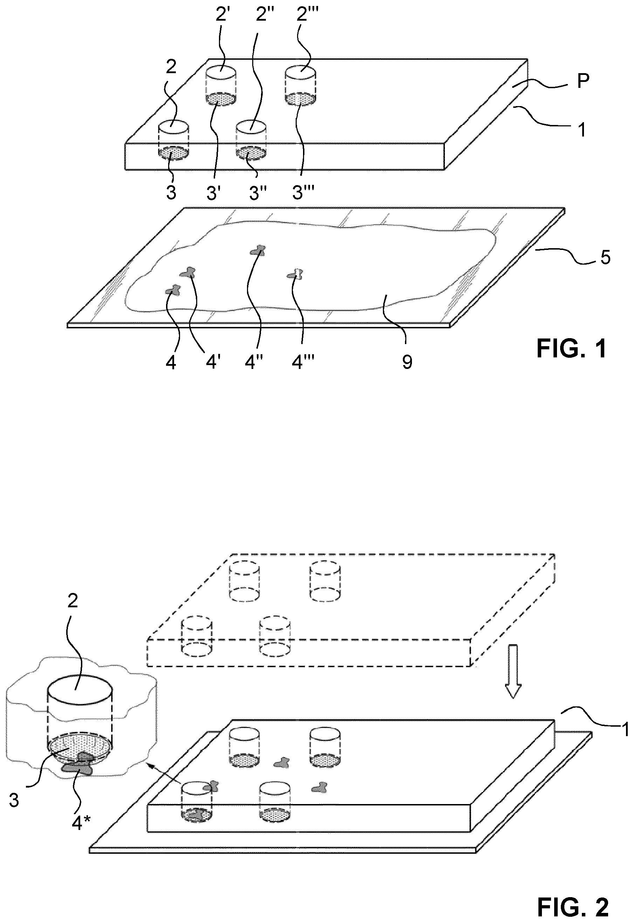

- Fig. 1: shows a transfer device (1) formed by a plate (P) with 4 perforations (2, 2', 2", 2"'), each covered with a flexible sheet material, where a first adhesive transfer areas (3) is positioned such as to overlap a first adhesive transfer area (3), which is defined via a first perforation (2), at least partially with a first biological sample (4) in the vertical direction, which biological sample is located on a sample support plate (5). The biological samples (4, 4', 4", 4"') are irregularly distributed within the tissue sample (6) on the sample support plate (5).
- Fig. 2: shows the transfer device (1) being moved downwards, after aligning, to decrease the distance between the adhesive transfer area (3) and the first biological sample (4), in the vertical direction. Once the adhesive transfer area (3) is within the vicinity of the first biological sample (4), the sheet material of the adhesive transfer area (3) is extended towards the first biological sample (4) at its first location such as to contact and adhere to the first biological sample (4) and then retracted to pick up the first biological sample (4*) from its first location.

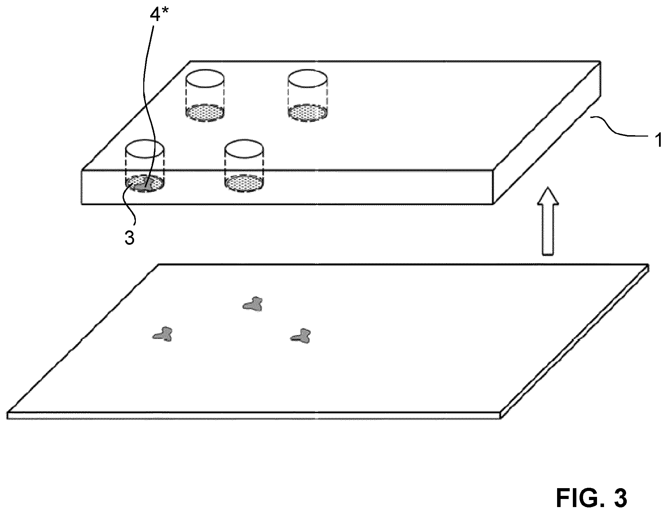

- Fig. 3: shows the transfer device (1) being moved upwards, to increase the distance between the adhesive transfer area (3) and the first location of the first biological sample (4*) in the vertical direction.

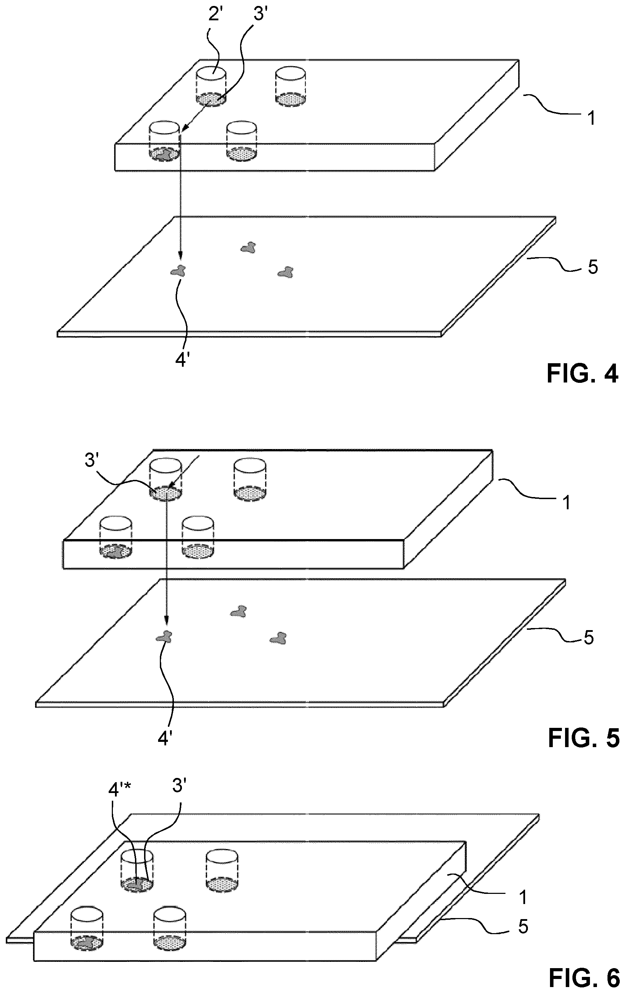

- Fig. 4: shows the transfer device (1) being moved in a horizontal plane such as to overlap a further adhesive transfer area (3'), which is defined via perforation (2'), at least partially with a further biological sample (4') in the vertical direction, which biological sample (4') is located on a sample support plate (5).
- Fig. 5: shows the transfer device (1) being moved downwards to decrease the distance between the adhesive transfer area (3') and the further biological sample (4') in the vertical direction.
- Fig. 6: shows that once the adhesive transfer area (3') is within the vicinity of the further biological sample (4'), the sheet material of the adhesive transfer area (3') is extended towards the biological sample (4') at its first location such as to contact and adhere to the biological sample (4') and then retracted to pick up the biological sample (4'*) from its first location, as shown in more detail in Fig.2 for adhesive transfer area (3) and biological sample (4)

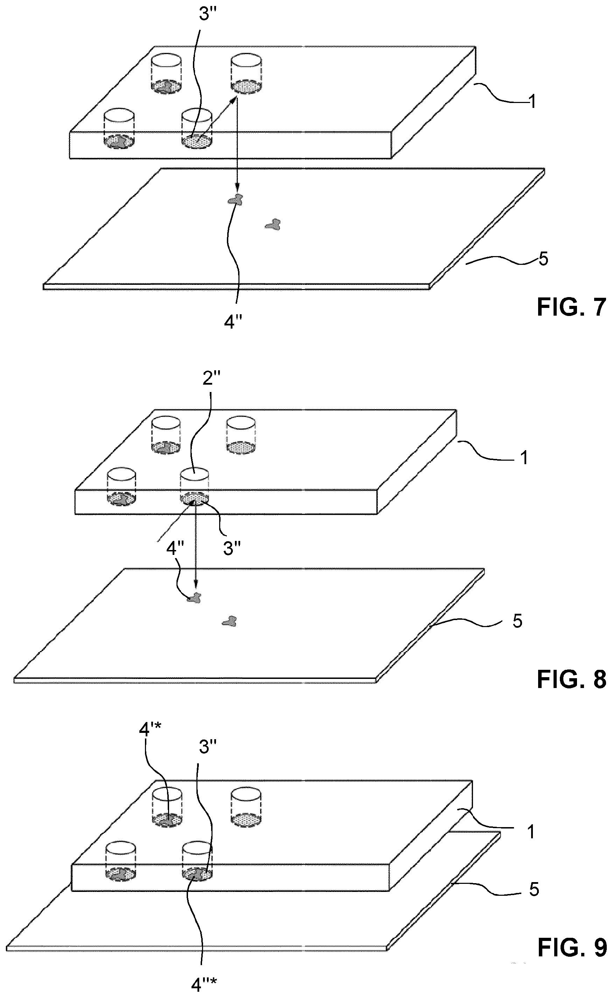

- Fig. 7: shows the transfer device (1) being moved upwards to again the distance between the adhesive transfer area (3") and the biological sample (4") in the vertical direction.
- Fig. 8: shows the transfer device (1) being moved in a horizontal plane to overlap a further adhesive transfer area (3"), which is defined via perforation (2'), at least partially with a further biological sample (4") in the vertical direction, which biological sample (4") is located on a sample support plate (5).
- Fig. 9: shows the transfer device (1) after having moved downwards to decrease the distance between the adhesive transfer area (3") and the further biological sample (4") in the vertical direction. Once the adhesive transfer area (3") is within the vicinity of the further biological sample (4"), the sheet material of the adhesive transfer area (3") is extended towards the biological sample (4") at its first location such as to contact and adhere to the biological sample (4") and then retracted to pick up the biological sample (4"*) from its first location, as shown in more detail in Fig.2 for adhesive transfer area (3) and biological sample (4)

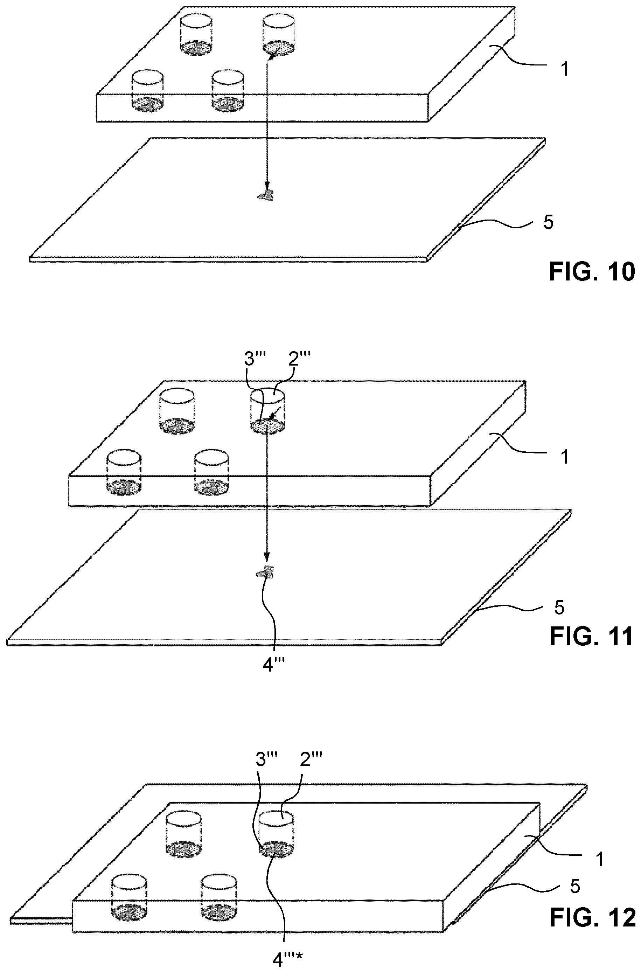

- Fig. 10: shows the transfer device (1) after having moved upwards, to increase the distance between the adhesive transfer area (3") and the first location of the first biological sample (4"*) in the vertical direction.
- Fig. 11: shows the transfer device (1) being moved in a horizontal plane to overlap a further adhesive transfer area (3‴), which is defined via perforation (2‴), at least partially with a further biological sample (4"') in the vertical direction, which biological sample (4"') is located on a sample support plate (5).
- Fig. 12: shows the transfer device (1) after having moved downwards to decrease the distance between the adhesive transfer area (3‴) and the further biological sample (4‴) in the vertical direction. Once the adhesive transfer area (3"') is within the vicinity of the further biological sample (4‴), the sheet material of the adhesive transfer area (3"') is extended towards the biological sample (4"') at its first location such as to contact and adhere to the biological sample (4‴) and then retracted to pick up the biological sample (4‴*) from its first location, as shown in more detail in Fig.2 for adhesive transfer area (3) and biological sample (4). At this point, all adhesive transfer areas (3, 3', 3", 3"') have taken up the biological sample (4, 4', 4", 4‴), and the biological samples are in separate second locations on the transfer device.

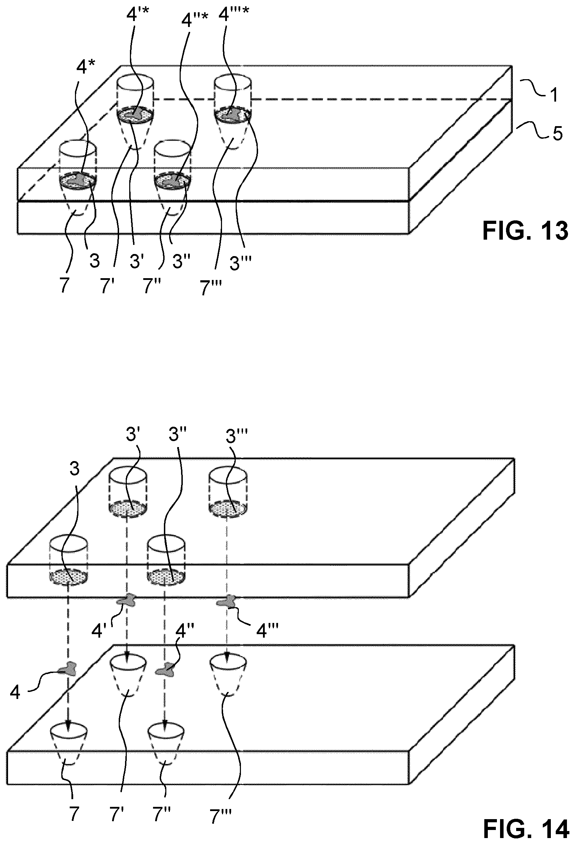

- Fig. 13: shows the transfer device (1), having all adhesive transfer areas (3, 3', 3", 3"') taking up a biological sample (4, 4', 4", 4‴), positioned on top of a multi-well plate having 4 wells (7, 7', 7", 7‴) into which wells the biological samples are to be released from the separate second locations on the transfer device, to bring each one of the adhesive transfer areas (3, 3', 3", 3‴) into overlap with the wells (7, 7', 7", 7"') of the multi-well plate, in vertical direction. Note that on the transfer device, the 4 biological samples, which were previously irregularly distributed in the tissue sample, are rearranged into a regular pattern, i.e. a rectangular array of 2 x 2, on the transfer device, in their second locations.
- Fig. 14: shows the simultaneous release, in exploded view, of the biological samples (4, 4', 4", 4‴) from their separate second locations at the adhesive transfer areas (3, 3', 3", 3"') into the wells of the multi-well plate.

### DESCRIPTION OF PREFERRED EMBODIMENTS

In the method according to the present invention, a number of spatially separate biological samples are essentially transferred from a number of spatially separate first locations to a number of spatially separate second locations, and in doing so are also rearranged from an irregular pattern that is inherent to and defined by the tissue sample toward a regular pattern that is defined by the downstream analysis the biological samples are subjected to. Generally, the number of spatially separate samples, first locations and second locations is the same, i.e. each individual biological sample is taken up and ultimately ends up in its individual well in a multi-well plate e. In this case, N is equal to M in the method of the present invention, or stated alternatively, only one biological sample is taken up per one adhesive transfer area. However, it may be advantageous to collect more than one spatially separate biological samples from more than one separate first locations, provided they share a common feature to be analyzed, into one and the same second location. In this case, N is larger than M in the method of the present invention, or stated alternatively, two or more biological samples are taken up per one adhesive transfer area.

The term "biological sample" refers to a sample comprising, or consisting of, a cell or clusters of cells, that can be found in a tissue or body fluid of an organism such as for example animals or plants.

The biological sample is usually prepared, as is known in the art, before being manipulated in the method according to the present invention.

In one embodiment, the biological sample essentially consists of a single cell or clusters of cells.

In another embodiment the biological sample comprises a cell or a cluster of cells and one or more synthetic polymer layers adhered the side of the sample that is opposite of the side of the sample facing the sample support plate, or stated alternatively, the side of the sample facing the transfer device or adhesive transfer area. The synthetic polymer layer is preferably a polyester layer such as for example PET or PEN.

In a particular embodiment of the method according to the present invention, as can be seen in Fig.1, the transfer device (1) formed by a plate with M perforations (2, 2', 2", 2"') is positioned in a horizontal plane such as to overlap a first adhesive transfer area (3), which is defined via a first perforation (2), with a first biological sample (4) in the vertical direction, which biological sample is located on a sample support plate (5). It is understood that in general, the overlap may be achieved via either positioning the transfer plate in a horizontal plane or positioning the sample support plate in a horizontal plane.

Upon achieving the overlap, the transfer device (1) is moved downwards, as can be seen in Fig. 2, such as to decrease the distance between the adhesive transfer area (3) and the first biological sample (4) in the vertical direction. Once the adhesive transfer area (3) is within the vicinity of the first biological sample (4), the sheet material of the adhesive transfer area (3) is extended towards the first biological sample (4) at its first location such as to contact and adhere to the first biological sample (4) and then retracted to pick up the first biological sample (4*) from its first location. It is understood that in general, the transfer device (1) may be moved downwards, or the sample support plate (5) may be moved upwards, to decrease the distance between the adhesive transfer area (3) and the first biological sample (4) in the vertical direction, when the transfer device is located above the sample support plate as in the depicted arrangement. Likewise, in general, the transfer device (1) may be moved upwards, or the sample support plate (5) may be moved downwards, to decrease the distance between the adhesive transfer area (3) and the first biological sample (4) in the vertical direction, when the transfer device is located below the sample support plate.

Once the first biological sample (4) is picked up, the transfer device is moved upwards, as can be seen in Fig. 3, such as to increase the distance between the adhesive transfer area (3) and the first biological sample (4) in the vertical direction. This then allows repositioning of the transfer device for a next iteration without the danger of collision between the transfer device (1), or the picked up biological samples (4*), and the biological sample (5). It is understood that in general, the transfer device (1) may be moved upwards, or the sample support plate (5) may be moved downwards, to increase the distance between the adhesive transfer area (3) and the first biological sample (4) in the vertical direction, when the transfer device is located above the sample support plate as in the depicted arrangement. Likewise, in general, the transfer device (1) may be moved downwards, or the sample support plate (5) may be moved upwards, to increase the distance between the adhesive transfer area (3) and the first biological sample (4) in the vertical direction, when the transfer device is located below the sample support plate.

Once the first iteration is completed, the next iteration is carried out, as can be seen in Figs.4 -7. As can be seen in Fig. 4, the transfer device (1) formed by a plate with M perforations (2, 2', 2", 2"') is then positioned in a horizontal plane such as to overlap a further adhesive transfer area (3'), which is defined via perforation (2'), with a further biological sample (4') in the vertical direction, which biological sample (4') is located on a sample support plate (5). The transfer device (1) is then moved downwards, as can be seen in Fig. 5, such as to decrease the distance between the adhesive transfer area (3') and the further biological sample (4') in the vertical direction. Once the adhesive transfer area (3') is within the vicinity of the further biological sample (4'), the sheet material of the adhesive transfer area (3') is extended towards the biological sample (4') at its first location such as to contact and adhere to the biological sample (4') and then retracted to pick up the biological sample (4*') from its first location, as shown in Fig. 6. Once the biological sample (4) is picked up, the transfer device is moved upwards, as can be seen in Fig. 7, such as to again increase the distance between the adhesive transfer area (3) and the biological sample (4) in the vertical direction. This then allows repositioning, shown in Fig.8 of the transfer device to begin the next iteration without the danger of collision between the transfer device (1), or the picked up biological samples (4*, 4'*), and the biological sample (5). Further two iterations are carried out in Figs. 8-12, until all adhesive transfer areas (3, 3', 3", 3"') have taken up the biological sample (4, 4', 4", 4‴)

Once all adhesive transfer areas (3, 3', 3", 3"') have taken up the biological sample (4, 4', 4", 4"') in their separate second locations on the transfer device, the transfer device (1) is positioned on top of a multi-well plate (6) in which wells such as to bring each one of the adhesive transfer areas (3, 3', 3", 3‴) into overlap, in vertical direction, with each one of the wells of the multi-well plate., as can be seen in Fig. 13. Note that on the transfer device, the 4 biological samples, which were previously irregularly distributed in the tissue sample, are rearranged into a regular pattern, i.e. a rectangular array of 2 x 2, on the transfer device in their separate second locations.

Each of the separate biological samples (4, 4', 4", 4"') are released simultaneously, from the separate second locations in the adhesive transfer areas (3, 3', 3", 3"') into the wells on the multi-well plate (6), as can be seen from exploded view in Fig. 14.

### LIST OF REFERENCE SIGNS

| | | | |
|---|---|---|---|
| 1 | transfer device | 5 | sample support plate |
| 2 | perforations | 6 | tissue sample |
| 3 | adhesive transfer areas | 7 | wells |
| 4 | biological samples | | |

## Claims

1. A method for the rearrangement and transfer of N separate biological samples (4, 4', 4", 4"') from N separate first locations arranged in an irregular pattern to M separate second locations arranged in a regular pattern on a transfer device (1), said transfer device (1) comprising at least M adhesive transfer areas (3, 3', 3", 3‴), wherein the at least M adhesive transfer areas are formed of at least a sheet of a flexible sheet material, and wherein N ≥ 2 and N ≥ M, comprising the steps of, in this order,:
a. positioning an adhesive transfer area of the at least M adhesive transfer areas (3, 3', 3", 3"') such as to bring the adhesive transfer area into overlap, in the vertical direction, with a separate biological sample (4) of the N separate biological samples (4, 4', 4", 4"') in its first location and optionally decreasing the distance, in vertical direction, between the first location of the separate biological sample and the adhesive transfer area, before or after the aforementioned positioning step,
b. extending the flexible sheet material of the adhesive transfer area of the at least M adhesive transfer areas (3, 3', 3", 3"') such as to bring the flexible sheet material of the adhesive transfer area of the M adhesive transfer areas into contact with the separate biological sample (4) of the N separate biological samples (4, 4', 4", 4‴) at its first location and such as to adhere the separate biological sample (4) of the N separate biological samples (4, 4', 4", 4‴) to the flexible sheet material of the adhesive transfer area of the M adhesive transfer areas (3, 3', 3", 3"'),
c. retracting the flexible sheet material of the adhesive transfer area of the at least M adhesive transfer areas (3, 3', 3", 3‴) to remove the separate biological sample (4*) of the N separate biological samples (4, 4', 4", 4"') from its first location and to transfer the separate biological sample (4*) of the N separate biological samples (4, 4', 4", 4"') to its second location, and optionally increasing the distance, in vertical direction, between the first location of the separate biological sample and the second location of the separate biological sample on the adhesive transfer area, after the aforementioned retracting step,
d. repeating steps a. to c. individually for each of the remaining separate biological samples of the N separate biological samples (4, 4', 4", 4‴) such as to remove each of the remaining separate biological samples of the N separate biological samples (4, 4', 4", 4"') from its first location and to transfer each of the remaining separate biological samples of the N separate biological samples (4, 4', 4", 4"') to its second location,
wherein the flexible sheet material is optically transparent at least within the visible spectrum (VIS),
wherein extending the flexible sheet material of the one adhesive transfer area of the M adhesive transfer areas is achieved by applying mechanical pressure using a plunger, which plunger comprises an optically transparent material.

2. The method according to any preceding claim, wherein the plunger consists of an optically transparent material.

3. The method according to any preceding claim, wherein the at least N separate biological samples in their first locations are arranged on a sample support plate (5), such as for example a microscope slide.

4. The method according to any preceding claim, wherein the at least M adhesive transfer areas (3, 3', 3", 3‴) of the flexible sheet material are coated with an adhesive agent, such as for example a silicone resin, and/or wherein the flexible sheet material comprises, or consists of, a elastomeric polymer material such as silicone resin, and/or wherein the flexible sheet material comprises, or consists of, a thermoplastic polymer material chosen among polyolefins, polesters, polycarbonates or polyamides, and/or wherein the flexible sheet material has a thickness of from 40 to about 400 micrometers, preferably of from 40 to about 200 micrometers, and/or wherein the flexible sheet material is a cast film or blown film.

5. The method according to claim 1, wherein it further comprises the step of:
e. affixing an augmenting plate having at least M perforations to the transfer device (1) such that the cross-sectional area of the at least M perforations overlap, in vertical direction, with the at least M adhesive transfer areas of the transfer device (1), such as to form at least M wells (7, 7', 7", 7‴), preferably comprising biological samples at their bottom, wherein the side walls of each of the at least M wells (7, 7', 7", 7"') are defined by the inner walls of the at least M perforations of the augmenting plate and the bottom of the at least M wells (7, 7', 7", 7"') are defined by the at least M adhesive transfer areas (3, 3', 3", 3"').

6. The method according to claim 1, wherein it further comprises the step of:
e. positioning the transfer device (1) such as to bring the at least M adhesive transfer areas (3, 3', 3", 3‴) into overlap, in the vertical direction, with at least M wells (7, 7', 7", 7"') on a receiver plate having at least M wells and such that the at least N separate biological samples (4, 4', 4", 4‴) face the at least M wells (7, 7', 7", 7"') of the receiver plate, optionally decreasing the distance, in vertical direction, between the at least M adhesive transfer areas of the transfer device (1) and the bottom of the at least M wells (7, 7', 7", 7"') of the receiver plate, and releasing each of the separate biological samples (4, 4', 4", 4‴) , either simultaneously or sequentially, from the at least M adhesive transfer areas (3, 3', 3", 3"') of the transfer device (1) into the at least M wells (7, 7', 7", 7‴) of the receiver plate.

7. The method according to claim 5 or 6, wherein the after step d., and preferably between step d. and e., the N separate biological samples (4, 4', 4", 4‴) on the at least M adhesive transfer areas (3, 3', 3", 3‴) of the transfer device (1) are treated with a releasing solution comprising a releasing agent, preferably with an aqueous releasing solution comprising a releasing agent chosen among proteolytic enzymes, such as trypsin.

8. The method according to claim 6 or claim 7 when dependent on claim 6, wherein the at least M wells (7, 7', 7", 7"') on a receiver plate are M wells on a multi-well plate, preferably M wells on a 96-well plate, under the proviso that M is 96 or less, or wherein the at least M wells on a receiver plate are M wells on a multi-well plate, preferably M wells on a 384-well plate, under the proviso that M is 384 or less.

9. The method according to any preceding claims, wherein the at least N separate biological samples (4, 4', 4", 4"') are laser microdissection samples.

10. The method according to any claim 1 to 9, wherein the transfer device (1) comprises a plate having at least M perforations (2, 2', 2", 2‴) and supporting the sheet material, wherein the M adhesive transfer areas (3, 3', 3", 3"') are defined by the overlap between the cross-sectional area of said perforations (2, 2', 2", 2"') and the sheet material, wherein the perforations are preferably circular or polygonal and wherein the plate is made from a metal or a polymer.

11. The method according to any preceding claims, wherein the at least M adhesive transfer areas (3, 3', 3", 3‴) are formed by a plurality of, and in particular by up to M, separate sheets of the flexible sheet material.

12. An apparatus configured to carry out the method of transfer of a N separate biological samples in N separate first locations to M separate second locations on a receiving plate using a transfer device (1), according any one of claims 1 to 11, the apparatus comprising:
i. a first unit configured to optically detect the N separate biological samples (4, 4', 4", 4‴) in the N separate first locations,
ii. a second unit configured to carry out the steps a. to c. according to any one of claims 1 to 11 for each of the N separate biological samples (4, 4', 4", 4‴) detected in step i., said second unit being equipped with a mechanical subunit having a plunger capable of extending and retracting the sheet material of N adhesive transfer areas (3, 3', 3", 3‴), wherein extending the sheet material of the adhesive transfer area (3, 3', 3", 3"') is achieved by applying mechanical pressure using the plunger, which plunger comprises an optically transparent material,
iii. a third unit configured to affix an augmenting plate to the transfer device (1) according to the method of claim 5 or to position the transfer device on a receiver plate according to claim 6.

## Patentansprüche

1. Verfahren zum Umordnen und Übertragen von N separaten biologischen Proben (4, 4', 4", 4"') von N separaten ersten Positionen, welche in einem unregelmässigen Muster angeordnet sind, zu M separaten zweiten Positionen, welche in einem regelmässigen Muster auf einer Übertragungsvorrichtung (1) angeordnet sind, wobei die Übertragungsvorrichtung (1) mindestens M klebende Übertragungsbereiche (3, 3', 3", 3‴) aufweist, wobei die mindestens M klebenden Übertragungsbereiche (3, 3', 3", 3‴) aus mindestens einer Lage eines flexiblen Lagenmaterials gebildet sind und wobei N ≥ 2 und N ≥ M ist, beinhaltend die folgenden Schritte, in dieser Reihenfolge:
a. Positionieren eines klebenden Übertragungsbereichs der mindestens M klebenden Übertragungsbereiche (3, 3', 3", 3‴), so dass der klebende Übertragungsbereich in vertikaler Richtung mit einer separaten biologischen Probe (4) der N separaten biologischen Proben (4, 4', 4", 4‴) an ihrer ersten Position überlappt, und optional Verringern des Abstands in vertikaler Richtung zwischen der ersten Position der separaten biologischen Probe und dem klebenden Übertragungsbereich vor oder nach dem oben genannten Positionierungsschritt,
b. Ausdehnen des flexiblen Lagenmaterials des klebenden Übertragungsbereichs der mindestens M klebenden Übertragungsbereiche (3, 3', 3", 3‴), um das flexible Lagenmaterial des klebenden Übertragungsbereichs der M klebenden Übertragungsbereiche mit der separaten biologischen Probe (4) der N separaten biologischen Proben (4, 4', 4", 4‴) an ihrer ersten Position in Kontakt zu bringen und um die separate biologische Probe (4) der N separaten biologischen Proben (4, 4', 4", 4‴) an dem flexiblen Lagenmaterial des klebenden Übertragungsbereichs der M klebenden Übertragungsbereiche (3, 3', 3", 3‴) anzuheften,
c. Zurückziehen des flexiblen Lagenmaterials des klebenden Übertragungsbereichs der mindestens M klebenden Übertragungsbereiche, um die separate biologische Probe (4*) der N separaten biologischen Proben (4, 4', 4", 4‴) von ihrer ersten Position zu entfernen und die separate biologische Probe (4*) der N separaten biologischen Proben (4, 4', 4", 4"') an ihre zweite Position zu übertragen, und optional Vergrößern des Abstands in vertikaler Richtung zwischen der ersten Position der separaten biologischen Probe und der zweiten Position der separaten biologischen Probe auf dem klebenden Übertragungsbereich nach dem oben genannten Zurückziehschritt,
d. Wiederholen der Schritte a. bis c. einzeln für jede der verbleibenden separaten biologischen Proben der N separaten biologischen Proben (4, 4', 4", 4‴), um jede der verbleibenden separaten biologischen Proben der N separaten biologischen Proben (4, 4', 4", 4‴) von ihrer ersten Position zu entfernen und jede der verbleibenden separaten biologischen Proben der N separaten biologischen Proben (4, 4', 4", 4‴) an ihre zweite Position zu übertragen,
wobei das flexible Lagenmaterial zumindest innerhalb des sichtbaren Spektrums (VIS) optisch transparent ist,
wobei das Ausdehnen des flexiblen Lagenmaterials des einen klebenden Übertragungsbereichs der M klebenden Übertragungsbereiche durch Ausüben von mechanischem Druck unter Verwendung eines Kolbens erreicht wird, wobei der Kolben ein optisch transparentes Material aufweist.

2. Verfahren nach einem der vorstehenden Ansprüche, wobei der Kolben aus einem optisch transparenten Material besteht.

3. Verfahren nach einem der vorstehenden Ansprüche, wobei die mindestens N separaten biologischen Proben an ihren ersten Positionen auf einer Probenträgerplatte (5), wie beispielsweise einem Objektträger, angeordnet sind.

4. Verfahren nach einem der vorstehenden Ansprüche, wobei die mindestens M klebende Übertragungsbereiche des flexiblen Lagenmaterials mit einem Klebstoff, wie beispielsweise einem Silikonharz, beschichtet sind und/oder wobei das flexible Lagenmaterial ein elastomeres Polymermaterial, wie beispielsweise Silikonharz, aufweist oder daraus besteht und/oder wobei das flexible Lagenmaterial ein thermoplastisches Polymermaterial, ausgewählt aus Polyolefinen, Polyestern, Polycarbonaten oder Polyamiden ausgewählt ist, und/oder wobei das flexible Lagenmaterial eine Dicke von 40 bis etwa 400 Mikrometern, vorzugsweise von 40 bis etwa 200 Mikrometern, aufweist, und/oder wobei das flexible Lagenmaterial eine Giessfolie oder eine Blasfolie ist.

5. Verfahren nach Anspruch 1, wobei es ferner den folgenden Schritt beinhaltet:
e. Anbringen einer Verstärkungsplatte mit mindestens M Perforationen an der Übertragungsvorrichtung (1), sodass sich die Querschnittsfläche der mindestens M Perforationen in vertikaler Richtung mit den mindestens M klebenden Übertragungsbereichen der Übertragungsvorrichtung (1) überlappt, um mindestens M Vertiefungen (7, 7', 7", 7"') zu bilden, welche vorzugsweise an ihrem Boden biologische Proben aufweisen, wobei die Seitenwände jeder der mindestens M Vertiefungen (7, 7', 7", 7‴) durch die Innenwände der mindestens M Perforationen der Verstärkungsplatte definiert sind und der Boden der mindestens M Vertiefungen (7, 7', 7", 7‴) durch die mindestens M klebenden Übertragungsbereiche (3, 3', 3", 3‴) definiert ist.

6. Verfahren nach Anspruch 1, wobei es ferner den folgenden Schritt beinhaltet:
e. Positionieren der Übertragungsvorrichtung (1), sodass die mindestens M klebenden Übertragungsbereiche (3, 3', 3", 3‴) in vertikaler Richtung mit mindestens M Vertiefungen (7, 7', 7", 7‴) auf einer Empfängerplatte mit mindestens M Vertiefungen überlappen und sodass die mindestens N getrennten biologischen Proben (4, 4', 4", 4‴) den mindestens M Vertiefungen (7, 7', 7", 7"') der Empfängerplatte zugewandt sind,
optional Verringern des Abstands in vertikaler Richtung zwischen den mindestens M klebenden Übertragungsbereichen der Übertragungsvorrichtung (1) und dem Boden der mindestens M Vertiefungen (7, 7', 7", 7"') der Aufnahmeplatte, und
Freisetzen jeder der separaten biologischen Proben (4, 4', 4", 4‴) entweder gleichzeitig oder nacheinander aus den mindestens M klebenden Übertragungsbereichen (3, 3', 3", 3‴) der Übertragungsvorrichtung (1) in die mindestens M Vertiefungen (7, 7', 7", 7"') der Aufnahmeplatte.

7. Verfahren nach Anspruch 5 oder 6, wobei nach Schritt d. und vorzugsweise zwischen Schritt d. und e. die N separaten biologischen Proben (4, 4', 4", 4‴) auf den mindestens M klebenden Übertragungsbereichen (3, 3', 3", 3‴) der Übertragungsvorrichtung (1) mit einer Freisetzungslösung behandelt werden, welche ein Freisetzungsmittel enthält, vorzugsweise mit einer wässrigen Freisetzungslösung, welche ein Freisetzungsmittel enthält, das aus proteolytischen Enzymen, wie Trypsin, ausgewählt ist.

8. Verfahren nach Anspruch 6 oder Anspruch 7, wenn von Anspruch 6 abhängig, wobei die mindestens M Vertiefungen (7, 7', 7", 7‴) auf einer Empfängerplatte M Vertiefungen auf einer Mehrfachvertiefungsplatte, vorzugsweise M Vertiefungen auf einer 96-Vertiefungsplatte, sind, unter der Voraussetzung, dass M 96 oder weniger beträgt, oder wobei die mindestens M Vertiefungen auf einer Empfängerplatte M Vertiefungen auf einer Mehrfachvertiefungsplatte, vorzugsweise M Vertiefungen auf einer 384-Vertiefungsplatte, sind, unter der Voraussetzung, dass M 384 oder weniger beträgt.

9. Verfahren nach einem der vorstehenden Ansprüche, wobei die mindestens N getrennten biologischen Proben (4, 4', 4", 4‴) Lasermikrodissektionsproben sind.

10. Verfahren nach einem der Ansprüche 1 bis 9, wobei die Übertragungsvorrichtung (1) eine Platte aufweist, welche mindestens M Perforationen (2, 2', 2", 2‴) aufweist, und welche das Lagenmaterial trägt, wobei die M klebenden Übertragungsbereiche (3, 3', 3", 3‴) durch die Überlappung zwischen der Querschnittsfläche der besagten Perforationen (2, 2', 2", 2‴) und dem Lagenmaterial definiert sind, wobei die Perforationen vorzugsweise kreisförmig oder polygonal sind und wobei die Platte aus einem Metall oder einem Polymer hergestellt ist.

11. Verfahren nach einem der vorstehenden Ansprüche, wobei die mindestens M klebenden Übertragungsbereiche (3, 3', 3", 3‴) durch eine Vielzahl von, und insbesondere durch bis zu M separate Lagen des flexiblen Lagenmaterials gebildet werden.

12. Vorrichtung, ausgebildet zur Ausführung des Verfahrens zum Übertragen von N separaten biologischen Proben an N separaten ersten Positionen zu M separaten zweiten Positionen auf einer Aufnahmeplatte unter Verwendung einer Übertragungsvorrichtung (1) gemäss einem der Ansprüche 1 bis 11, wobei die Vorrichtung aufweist:
i. eine erste Einheit, welche derart konfiguriert ist, dass sie die N separaten biologischen Proben (4, 4', 4", 4‴) an den N separaten ersten Positionen optisch erfasst,
ii. eine zweite Einheit, welche derart konfiguriert ist, dass sie die Schritte a. bis c. gemäss einem der Ansprüche 1 bis 11 für jede der in Schritt i. erfassten N separaten biologischen Proben (4, 4', 4", 4‴) ausführt, wobei die besagte zweite Einheit mit einer mechanischen Untereinheit ausgestattet ist, welche einen Kolben aufweist, der das Lagenmaterial von N klebenden Übertragungsbereichen (3, 3', 3", 3"') ausfahren und zurückziehen kann, wobei das Ausfahren des Lagenmaterials des klebenden Übertragungsbereichs (3, 3', 3", 3‴) durch Ausüben von mechanischem Druck unter Verwendung des Kolbens erreicht wird, wobei der Kolben ein optisch transparentes Material aufweist,
iii. eine dritte Einheit, welche derart ausgebildet ist, dass sie eine Verstärkungsplatte gemäss dem Verfahren nach Anspruch 5 an der Übertragungsvorrichtung (1) befestigt oder gemäss Anspruch 6 die Übertragungsvorrichtung auf einer Aufnahmeplatte positioniert.

## Revendications

1. Un procédé pour le réarrangement et le transfert de N échantillons biologiques distincts (4, 4', 4", 4‴) depuis N premiers emplacements distincts disposés selon un motif irrégulier vers M seconds emplacements distincts disposés selon un motif régulier sur un dispositif de transfert (1), ledit dispositif de transfert (1) comprenant au moins M zones de transfert adhésives (3, 3', 3", 3"'), dans lequel les au moins M zones de transfert adhésives sont formées d'au moins une feuille d'un matériau en feuille flexible, et dans lequel N ≥ 2 et N ≥ M, comprenant les étapes suivantes, dans cet ordre :
a. positionner une zone de transfert adhésive parmi les au moins M zones de transfert adhésives (3, 3', 3", 3"') de manière à amener la zone de transfert adhésive en chevauchement, dans la direction verticale, avec un échantillon biologique distinct (4) parmi les N échantillons biologiques distincts (4, 4', 4", 4"') à son premier emplacement et, éventuellement, réduire la distance, dans la direction verticale, entre le premier emplacement de l'échantillon biologique distinct et la zone de transfert adhésive, avant ou après l'étape de positionnement susmentionnée,
b. étendre le matériau en feuille flexible de la zone de transfert adhésive des au moins M zones de transfert adhésives (3, 3', 3", 3"') de manière à mettre le matériau en feuille flexible de la zone de transfert adhésive des M zones de transfert adhésives en contact avec l'échantillon biologique distinct (4) des N échantillons biologiques distincts (4, 4', 4", 4"') à son premier emplacement et de manière à faire adhérer l'échantillon biologique distinct (4) des N échantillons biologiques distincts (4, 4', 4", 4‴) au matériau en feuille flexible de la zone de transfert adhésive des M zones de transfert adhésives (3, 3', 3", 3‴),
c. rétracter le matériau en feuille flexible de la zone de transfert d'adhésive des au moins M zones de transfert d'adhésives (3, 3', 3", 3"') pour retirer l'échantillon biologique distinct (4*) des N échantillons biologiques séparés (4, 4', 4", 4"') de son premier emplacement et transférer l'échantillon biologique distinct (4*) des N échantillons biologiques séparés (4, 4', 4", 4"') vers son deuxième emplacement, et éventuellement augmenter la distance, dans la direction verticale, entre le premier emplacement de l'échantillon biologique distinct et le deuxième emplacement de l'échantillon biologique distinct sur la zone de transfert adhésive, après l'étape de retrait susmentionnée,
d. répéter les étapes a. à c. individuellement pour chacun des échantillons biologiques distincts restants parmi les N échantillons biologiques distincts (4, 4', 4", 4"') de manière à retirer chacun des échantillons biologiques distincts restants des N échantillons biologiques distincts (4, 4', 4", 4"') depuis son premier emplacement et de transférer chacun des échantillons biologiques distincts restants des N échantillons biologiques distincts (4, 4', 4", 4‴) vers son deuxième emplacement,
dans lequel le matériau en feuille flexible est optiquement transparent au moins dans le spectre visible (VIS),
dans lequel l'extension du matériau en feuille flexible de la zone de transfert adhésive des M zones de transfert adhésives est obtenue en appliquant une pression mécanique à l'aide d'un piston, lequel piston comprend un matériau optiquement transparent.

2. Le procédé selon l'une quelconque des revendications précédentes, dans lequel le piston est constitué d'un matériau optiquement transparent.

3. Le procédé selon l'une quelconque des revendications précédentes, dans lequel les au moins N des échantillons biologiques distincts dans leurs premiers emplacements sont disposés sur une plaque de support d'échantillons (5), telle qu'une lame de microscope.

4. Le procédé selon l'une quelconque des revendications précédentes, dans lequel les au moins M zones de transfert adhésives (3, 3', 3", 3"') du matériau en feuille flexible sont recouvertes d'un agent adhésif, tel qu'une résine de silicone, et/ou dans lequel le matériau en feuille flexible comprend ou est constitué d'un matériau polymère élastomère tel qu'une résine de silicone, et/ou dans lequel le matériau en feuille flexible comprend ou est constitué d'un matériau polymère thermoplastique choisi parmi les polyoléfines, les polyesters, les polycarbonates ou les polyamides, et/ou dans lequel le matériau en feuille flexible a une épaisseur comprise entre 40 et environ 400 micromètres, de préférence entre 40 et environ 200 micromètres, et/ou dans lequel le matériau en feuille flexible est un film coulé ou un film soufflé.

5. Le procédé selon la revendication 1, dans lequel il comprend en outre l'étape consistant à :
e. fixer une plaque d'augmentation comportant au moins M perforations au dispositif de transfert (1) de telle sorte que la section transversale des au moins M perforations se chevauchent, dans la direction verticale, avec les au moins M zones de transfert adhésives du dispositif de transfert (1), de manière à former au moins M puits (7, 7', 7", 7‴), comprenant de préférence des échantillons biologiques au fond, dans lesquels les parois latérales de chacun des au moins M puits (7, 7', 7", 7"') sont définies par les parois intérieures des au moins M perforations de la plaque d'augmentation et le fond des au moins M puits (7, 7', 7", 7"') sont définis par les au moins M zones de transfert adhésives (3, 3', 3", 3"').

6. Le procédé selon la revendication 1, dans lequel il comprend en outre l'étape consistant à :
e. positionner le dispositif de transfert (1) de manière à amener les au moins M zones de transfert adhésives (3, 3', 3", 3"') en chevauchement, dans la direction verticale, avec au moins M puits (7, 7', 7", 7"') sur une plaque réceptrice comportant au moins M puits et de telle sorte que les au moins N échantillons biologiques distincts (4, 4', 4", 4"') soient face aux au moins M puits (7, 7', 7", 7"') de la plaque réceptrice, en diminuant éventuellement la distance, dans la direction verticale, entre les au moins M zones de transfert adhésives du dispositif de transfert (1) et le fond des au moins M puits (7, 7', 7", 7"') de la plaque réceptrice, et libérer chacun des échantillons biologiques séparés (4, 4', 4", 4‴) , soit simultanément, soit séquentiellement, des au moins M zones de transfert adhésives (3, 3', 3", 3"') du dispositif de transfert (1) dans les au moins M puits (7, 7', 7", 7"') de la plaque réceptrice.

7. Le procédé selon la revendication 5 ou 6, dans lequel, après l'étape d., et de préférence entre les étapes d. et e., les N échantillons biologiques distincts (4, 4', 4", 4"') sur les au moins M zones de transfert adhésives (3, 3', 3", 3"') du dispositif de transfert (1) sont traitées avec une solution de relâchement comprenant un agent de relâchement, de préférence avec une solution de relâchement aqueuse comprenant un agent de relâchement choisi parmi les enzymes protéolytiques, telles que la trypsine.

8. Le procédé selon la revendication 6 ou la revendication 7 lorsqu'elle dépend de la revendication 6, dans lequel les au moins M puits (7, 7', 7", 7"') sur une plaque réceptrice sont M puits sur une plaque à puits multiples, de préférence M puits sur une plaque à 96 puits, à condition que M soit inférieur ou égal à 96, ou dans laquelle les au moins M puits sur une plaque réceptrice sont M puits sur une plaque à puits multiples, de préférence M puits sur une plaque à 384 puits, à condition que M soit inférieur ou égal à 384.

9. Le procédé selon l'une quelconque des revendications précédentes, dans lequel les au moins N échantillons biologiques distincts (4, 4', 4", 4‴) sont des échantillons de microdissection au laser.

10. Le procédé selon l'une quelconque des revendications 1 à 9, dans lequel le dispositif de transfert (1) comprend une plaque comportant au moins M perforations (2, 2', 2", 2"') et supportant le matériau en feuille, dans laquelle les M zones de transfert d'adhésive (3, 3', 3", 3"') sont définies par le chevauchement entre la section transversale desdites perforations (2, 2', 2", 2"') et le matériau en feuille, dans lequel les perforations sont de préférence circulaires ou polygonales et dans lequel la plaque est fabriquée à partir d'un métal ou d'un polymère.

11. Le procédé selon l'une quelconque des revendications précédentes, dans lequel les au moins M zones de transfert d'adhésives (3, 3', 3", 3"') sont formées par une pluralité, et en particulier par jusqu'à M feuilles séparées du matériau en feuille flexible.

12. Un appareil configuré pour mettre en œuvre le procédé de transfert de N échantillons biologiques distincts dans N premiers emplacements distincts vers M seconds emplacements distincts sur une plaque réceptrice à l'aide d'un dispositif de transfert (1), selon l'une quelconque des revendications 1 à 11, l'appareil comprenant :
i. une première unité configurée pour détecter optiquement les N échantillons biologiques distincts (4, 4', 4", 4"') dans les N premiers emplacements distincts,
ii. une deuxième unité configurée pour mettre en œuvre les étapes a. à c. selon l'une quelconque des revendications 1 à 11 pour chacun des N échantillons biologiques distincts (4, 4', 4", 4"') détectés à l'étape i., ladite deuxième unité étant équipée d'une sous-unité mécanique comportant un piston capable d'étendre et de rétracter le matériau en feuille de N zones de transfert adhésives (3, 3', 3", 3‴), dans lequel l'extension du matériau en feuille de la zone de transfert adhésive (3, 3', 3", 3‴) est réalisée en appliquant une pression mécanique à l'aide du piston, lequel piston comprend un matériau optiquement transparent,
iii. une troisième unité configurée pour fixer une plaque d'augmentation au dispositif de transfert (1) selon le procédé de la revendication 5 ou pour positionner le dispositif de transfert sur une plaque réceptrice selon la revendication 6.
